# EUROPÄISCHE PATENTANMELDUNG

(11) **EP 4 201 846 A1**
(43) Veröffentlichungstag der Anmeldung: **28.06.2023**
(21) Anmeldenummer: 21216498.2
(22) Anmeldetag: 21.12.2021
(51) Int. Cl.: B65G 21/20, G01G 11/00

(54) **FÖRDERBAND**

(71) Anmelder: Bizerba SE & Co. KG, 72336 Balingen (DE)
(72) Erfinder: Haas, Michael, 31141 Hildesheim (DE); Tröger, Philipp, 30169 Hannover (NL); Pawar, Saniya, 38239 Salzgitter (DE)
(74) Vertreter: Manitz Finsterwald Patent- und Rechtsanwaltspartnerschaft mbB

(57) **Zusammenfassung**

Die Erfindung betrifft ein Förderband zum Transport von Lebensmittelprodukten mit einer Verpackung aus einem magnetisierbaren Material, insbesondere Konservendosen, entlang einer Transportrichtung, wobei das Förderband einen Bandkörper und ein im Betrieb des Förderbands um den Bandkörper umlaufendes Transportband mit einem Obertrum und einem Untertrum umfasst. Der Bandkörper ist mit einer Magnetanordnung versehen, die ein in Richtung des Obertrums des Transportbands wirkendes Magnetfeld erzeugt, das bandeinlaufseitig einen höheren Wert besitzt als bandauslaufseitig.

## Beschreibung

Die Erfindung betrifft ein Förderband zum Transport von Lebensmittelprodukten mit einer Verpackung aus einem magnetisierbaren Material, insbesondere Konservendosen, entlang einer Transportrichtung, wobei das Förderband einen Bandkörper und ein im Betrieb des Förderbands um den Bandkörper umlaufendes Transportband mit einem Obertrum und einem Untertrum umfasst.

Förderbänder werden in der Lebensmittelindustrie eingesetzt, um Lebensmittelprodukte oder sonstige Waren von einer Produktionsstation zur nächsten zu transportieren. Um den Durchsatz zu erhöhen, folgen die Produkte eng aufeinander, d.h. der Abstand zwischen aufeinander folgenden Produkten wird möglichst gering gehalten. Allerdings kann dieser geringe Abstand nicht beibehalten werden, wenn die Produkte einem Wägeband einer Kontrollwaage, die auch als Checkweigher bezeichnet wird, oder eines Preisauszeichners zugeführt wird, da sich zu jedem Zeitpunkt immer nur genau eines der Produkte auf dem Wägeband befinden darf, um eine korrekte Gewichtserfassung zu gewährleisten. Es ist daher erforderlich, die Produkte vor dem Wägeband einzeln und nacheinander zu beschleunigen, um deren gegenseitigen Abstand zu vergrößern. Dies wird als Vereinzelung bezeichnet. Hierzu ist es bekannt, an ein Förderband, das mit normaler Transportgeschwindigkeit betrieben wird, ein Förderband anzuschließen, das mit einer im Vergleich hierzu höheren Transportgeschwindigkeit betrieben wird, wodurch der Abstand der Produkte zueinander beim Übergang auf das schnellere Förderband erhöht wird.

Beim Übergang von dem Förderband, das mit der normalen Geschwindigkeit betrieben wird, auf das schnellere Transportband werden die Produkte jedoch ruckartig beschleunigt, was dazu führen kann, dass ein Schlupf zwischen dem Transportband des schnellen Förderbands und den darauf liegenden Produkten entsteht, so dass Schwankungen in dem Abstand der vereinzelten Produkte zueinander auftreten können. Darüber hinaus kann sich die ruckartige Beschleunigung in einer zumindest anfänglichen Instabilität der Produkte auf dem schnelleren Förderband bemerkbar machen kann. Dies ist insbesondere dann kritisch, wenn es sich um Produkte mit einer im Vergleich zu ihrer Grundfläche großen Höhe handelt, wie es beispielsweise bei einigen Konservendosen der Fall sein kann, so dass sie ins Wanken geraten, im ungünstigsten Fall umkippen können. Darüber hinaus ist dies kritisch, wenn Konservendosen oder dergleichen zum Zeitpunkt des Wiegens zwar befüllt, jedoch noch nicht verschlossen sind. Sind die Konservendosen mit einer Flüssigkeit und relativ voll befüllt, kann durch das Wanken das Problem auftreten, dass Flüssigkeit ausläuft. Dieses Problem wird verschärft, wenn es sich bei der Flüssigkeit um eine ölige Substanz handelt, da dann das Transportband des schnelleren Förderbands ölig wird und dadurch die Reibung zwischen den Konservendosen und dem Transortband herabgesetzt wird und damit ein noch geringerer Mitnahmeeffekt zwischen dem Transportband und den Konservendosen vorhanden ist.

Der Erfindung liegt die Aufgabe zugrunde, ein Förderband der eingangs genannten Art anzugeben, das eine präzise und sichere Vereinzelung von Konservendosen und vergleichbaren Verpackungen von Lebensmittelprodukten gewährleisten kann.

Diese Aufgabe wird durch ein Förderband mit den Merkmalen des Anspruchs 1 gelöst, und insbesondere dadurch, dass der Bandkörper mit einer Magnetanordnung versehen ist, die ein in Richtung des Obertrums des Transportbands wirkendes Magnetfeld erzeugt, das bandeinlaufseitig einen höheren Wert besitzt als bandauslaufseitig.

Das erfindungsgemäße Förderband kann als schnelles Förderband, an das die Lebensmittelprodukte von einem langsameren Förderband übergeben werden, eingesetzt werden. Die Konservendosen oder sonstigen Verpackungen aus einem magnetisierbaren Material, insbesondere aus Weißblech, werden von dem nach oben wirkenden Magnetfeld der unterhalb des Obertrums des Transportbands angeordneten Magnetanordnung angezogen. Es herrscht somit eine Magnetkraft, die die Konservendosen und dergleichen gegen die Oberfläche des Obertrums zieht und dadurch sicher auf dem laufenden Transportband des schnelleren Förderbands hält. Einem Schlupf oder einem Wanken, wie er bzw. es im Stand der Technik auftritt, kann dadurch entgegengewirkt werden. Bandeingangsseitig wird eine große Haltekraft gewählt, da dort aufgrund der dort stattfindenden ruckartigen Beschleunigung der Schlupf zwischen dem Transportband und den darauf liegenden Produkten und die Instabilität der Lebensmittelprodukte am größten ist. Hierdurch kann eine präzise Vereinzelung ohne große Schwankungen in den Abständen der Produkte zueinander erreicht werden, so dass die Förderbänder mit einer höheren Geschwindigkeit und dadurch einem höheren Durchsatz betrieben werden können. Bandausgangsseitig hingegen ist eine lediglich geringe oder keine Haltekraft erforderlich, da die Lebensmittelprodukte an dieser Stelle bereits wieder zumindest ausreichend, insbesondere vollständig, stabilisiert sind und um die Übergabe der Lebensmittelprodukte an das Wägeband oder ein dem Wägeband vorgeschaltetes Förderband, das mit gleicher Transportgeschwindigkeit wie das erfindungsgemäße Förderband betrieben wird, zu erleichtern. Die Lebensmittelprodukte werden beim Verlassen des Förderbands dann nur unwesentlich oder nicht von der der Magnetkraft der Magnetanordnung zurückgehalten.

Vorteilhafte Ausgestaltungen der Erfindung sind in den Unteransprüchen, der Beschreibung und der Zeichnung beschrieben.

Vorzugsweise ist vorgesehen, dass das Magnetfeld an dem bandeinlaufseitigen Ende des Förderbands seinen höchsten Wert annimmt und/oder dass der Wert des bandauslaufseitigen Magnetfelds höchstens 20%, insbesondere höchstens 10%, des Werts des bandeinlaufseitigen Magnetfelds beträgt, insbesondere gleich Null ist. Wie vorstehend erläutert ist, ist die Instabilität der Lebensmittelprodukte direkt nach Übergabe am größten, so dass hier auch das größte Magnetfeld erforderlich ist. Bandauslaufseitig hingegen ist kein Magnetfeld mehr erforderlich, wobei grundsätzlich jedoch noch ein kleines Magnetfeld vorhanden sein kann, insbesondere um auch bei kurzen Förderbändern eine ausreichende Stabilisierung der Lebensmittelprodukte vor der Übergabe an das Wägeband oder das nächste Förderband zu gewährleisten. Alternativ kann auch der Wert des Magnetfelds an dem bandeinlaufseitigen Ende des Förderbands erhöht werden, um eine schnellere Stabilisierung zu erreichen.

Insbesondere ist vorgesehen, dass das Magnetfeld in Transportrichtung von bandeinlaufseitig nach bandauslaufseitig monoton, insbesondere stufenweise monoton, abnimmt. Eine Ausführung, bei der das Magnetfeld zwischenzeitlich wieder ansteigt, ist grundsätzlich möglich, bei höherem Aufwand jedoch mit keinem weitergehenden Vorteil verbunden.

Gemäß einer bevorzugten Ausführungsform umfasst die Magnetanordnung eine Vielzahl von Permanentmagneten, die über den Bandkörper verteilt angeordnet sind. Permanentmagnete sind kostengünstig und in vielen verschiedenen Ausführungen und Größen erhältlich und können ohne großen Aufwand entsprechend der gewünschten Magnetkraftverteilung angeordnet werden.

Bevorzugt sind die Permanentmagnete gemäß einem Muster mit mehreren, insbesondere wenigstens drei, in Transportrichtung verlaufenden Spalten und mehreren, insbesondere wenigstens drei, hierzu quer, insbesondere senkrecht, verlaufenden Zeilen, angeordnet, wobei wenigstens drei Spalten und wenigstens drei Zeilen jeweils mit einem Permanentmagneten besetzt sind. Die Anordnung in Spalten und Zeilen erhöht die Übersichtlichkeit, so dass schnell ersichtlich ist, wie die Magnetfeldverteilung der Magnetanordnung geschaffen ist.

Vorzugsweise ist das Muster dabei derart gewählt, dass die Anzahl der Permanentmagnete pro Zeile in Transportrichtung von bandeinlaufseitig nach bandauslaufseitig monoton, insbesondere stufenweise monoton, abnimmt, wobei bevorzugt in der in Transportrichtung von bandeinlaufseitig nach bandauslaufseitig gesehen letzten Zeile keine Permanentmagnete angeordnet sind. Dies ist wie vorstehend im allgemeineren Zusammenhang erläutert begründet.

Insbesondere können die Permanentmagnete spiegelsymmetrisch zu einer sich in Transportrichtung und senkrecht zum Obertrum des Transportbands erstreckenden Symmetrieebene angeordnet sein. Durch diese Symmetrie wird eine unsymmetrische Haltekraft relativ zur Transportrichtung vermieden, wodurch, sofern erforderlich, eine besonders gute Stabilisierung der Lebensmittelprodukte auf dem Transportband erreicht werden kann.

Der Bandkörper kann mehrteilig mit einer Rahmenkonstruktion und einem in die Rahmenkonstruktion austauschbar integrierbaren, insbesondere magnetisierbaren, Magnetträger ausgebildet sein, wobei der Magnetträger mit der Magnetanordnung versehen ist, wobei mehrere Magnetträger vorgesehen sind, die sich in der Anzahl und/oder der Anordnung der Permanentmagnete voneinander unterscheiden und alternativ zueinander in die Rahmenkonstruktion integrierbar sind. Hierdurch kann die Magnetanordnung und damit das wirkende Magnetfeld, insbesondere abhängig von der Art des jeweiligen Lebensmittelprodukts, ohne großen Aufwand gewählt werden. Grundsätzlich kann der Magnetträger auch aus Kunststoff oder einem nicht magnetisierbaren metallischen Material bestehen.

Nach einer bevorzugten Ausführungsform weist der Bandkörper, insbesondere ein Teil hiervon, insbesondere der vorgenannte Magnetträger, sich in Transportrichtung erstreckende, insbesondere parallel zueinander verlaufende, Nuten auf, in die die Permanentmagnete eingesetzt sind. Durch die Nuten wird eine übersichtliche Vorgabe zur Platzierung der Permanentmagnete geschaffen. Der Teil des Bandkörpers kann einstückig, insbesondere aus einem, insbesondere magnetisierbaren, Vollmaterial, insbesondere ferritischen Stahl, bestehend, ausgebildet sein. Vorzugsweise ist das Vollmaterial korrosionsfest. Insbesondere können die Nuten in das Vollmaterial gefräst sein. Die Permanentmagnete können in die Nuten eingelegt oder eingeklebt sein. Hierbei handelt es sich um besonders kostengünstige und einfache Verfahren. Alternativ können die Permanentmagnete beispielsweise auch über Rastmittel, Klemmmittel oder Stifte in den Nuten befestigbar sein. Eine Befestigung ist bei einem magnetisierbaren Vollmaterial nicht zwingend erforderlich, da die Permanentmagnete aufgrund ihrer Magnetkraft ohnehin selbstständig in den Nuten haften. Die Anordnung der Permanentmagnete kann dann auch einfach geändert werden.

Bei dem vorgenannten magnetisierbaren Vollmaterial kann es sich beispielsweise um einen ferritischen Stahl, insbesondere mit der Werkstoff-Nr. 1.4016, handeln. Ist der vorgenannte Magnetträger bzw. der vorgenannte Teil des Bandkörpers aus einem magnetisierbaren Vollmaterial hergestellt, kann die Magnetkraft der Magnetanordnung einerseits über die Oberfläche des Obertrums hin homogener verteilt werden, insbesondere aufgrund der zwischen den Nuten verlaufenden Wänden aus Vollmaterial, und andererseits zum Untertrum hin zumindest teilweise abgeschirmt werden. Die Wände zwischen den Nuten besitzen damit nicht nur eine mechanische Funktion, die Platzierung der Permanentmagnete vorzugeben, sondern auch eine Funktion mit magnetischer Wirkung.

Insbesondere handelt es sich bei den Permanentmagneten um nicht schaltbare, reine Permanentmagnete. Die Permanentmagnete sind also nicht mit Spulen, Elektromagneten oder Permanentmagneten mit Spulen kombiniert, die beispielsweise dafür verwendet werden könnten, das Magnetfeld der Permanentmagnete zu kompensieren. Insbesondere sind die Permanentmagnete lagefest angeordnet, d.h. Position und Orientierung der Permanentmagnete sind fest. Die Permanentmagnete sind also nicht bewegbar, insbesondere nicht verkippbar bzw. nicht verschwenkbar.

Die Permanentmagnete können als Quadermagnete ausgebildet sein. Quadermagnete sind gut handhabbar. Die Permanentmagnete können mit ihrer größten Kantenlänge in Transportrichtung, insbesondere in Längsrichtung der vorgenannten Nuten, und ihrer kleinsten Kantenlänge in Richtung des Obertrums des Transportbands ausgerichtet sein. Die Permanentmagnete besitzen dann nur eine geringe Bauhöhe. Die Kantenlängen der Permanentmagnete können höchstens 40 mm, höchstens 20 mm und höchstens 10 mm betragen.

Vorzugsweise sind die Permanentmagnete identisch. Dadurch kann die durch die jeweils gewählte Magnetanordnung erzielte Magnetfeldverteilung einfach abgeschätzt werden, ohne dass aufwändige Berechnungen erforderlich sind. Grundsätzlich können aber auch verschieden starke Permanentmagnete verwendet werden. Insbesondere können bandeinlaufseitig stärke Permanentmagnete verwendet werden als bandauslaufseitig. Die Permanentmagnete können in einer Ebene und/oder auf gleicher Höhe angeordnet sein. Auch hierdurch kann die durch die jeweils gewählte Magnetanordnung erzielte Magnetfeldverteilung einfach abgeschätzt werden, ohne dass aufwändige Berechnungen erforderlich sind.

Bevorzugt zeigt die Magnetisierungsrichtung der Permanentmagnete in Richtung des Obertrums des Transportbands. Hierdurch ergibt sich eine besonders große Haltekraft pro Volumeneinheit der Permanentmagnete, so dass die Permanentmagnete besonders klein gehalten werden können. Besonderes bevorzugt sind die Pole benachbarter Permanentmagnete in Transportrichtung und quer, insbesondere senkrecht, zur Transportrichtung wechselseitig orientiert. Dann zeigen die Nordpole und die Südpole jeweils abwechselnd nach oben und nach unten, wodurch sich an der Oberfläche des Obertrums des Transportbands ein besonders hohes, einheitliches Magnetfeld ergibt. Es entsteht eine Art Schachbrettmuster aus Nord- und Südpolen.

Es kann vorgesehen sein, dass der Bandkörper an seiner dem Obertrum des Transportbands zugewandte Seite oder eine auf dem Bandkörper befestigte Deckplatte an ihrer dem Obertrum des Transportbands zugewandten Seite mit einer Teflonbeschichtung, insbesondere einem Teflonklebeband, versehen ist. Teflon besitzt einen besonders geringen Reibungskoeffizienten, so dass der Verschleiß des Transportbands, das aufgrund der Magnetkraft der Magnetanordnung in besonderem Maße von den Lebensmittelprodukten gegen den Bandkörper gedrückt wird, reduziert werden kann.

Insbesondere ist das Förderband als Auflegeförderband ausgebildet, bei dem die Lebensmittelprodukte auf das Obertrum des Transportbands aufgelegt werden. Bei dem Förderband handelt es sich also nicht um ein Förderband, bei dem die Lebensmittelprodukte hängend transportiert werden. Insbesondere ist das Förderband als Gurtförderer ausgebildet, bei dem das Transportband als ein einziger Fördergurt ausgebildet ist. Das Förderband ist demnach nicht als Mehrspurförderband ausgebildet und besitzt auch nicht mehrere nebeneinander liegende Riemen, wie es bei einem Riemenförderer der Fall ist.

Die Erfindung betrifft ferner eine Kontrollwaage oder einen Preisauszeichner, mit einem Förderband, wie es vorstehend beschrieben ist, einem dem Förderband vorgeschalteten Zuführband und einem dem Förderband nachgeschalteten Wägeband, wobei eine Steuereinheit vorgesehen ist, die einen Betriebsmodus aufweist, der die Bänder derart steuert, dass die Transportgeschwindigkeit des Förderbands, insbesondere um wenigstens einen Faktor 2, insbesondere um wenigstens einen Faktor 3, größer ist als die Transportgeschwindigkeit des Zuführbands und dass die Transportgeschwindigkeit des Wägebands der Transportgeschwindigkeit des Förderbands entspricht.

Die Erfindung wird im Folgenden beispielhaft unter Bezugnahme auf die Zeichnung beschrieben. Es zeigen, jeweils in schematischer Darstellung,
- Fig. 1: eine Kontrollwaage in einer Draufsicht mit einem erfindungsgemäßen Förderband,
- Fig. 2: das Förderband gemäß Fig. 1 in einer Seitenansicht,
- Fig. 3: einen Bandkörper des Förderbands gemäß Fig. 1 in einer Draufsicht, und
- Fig. 4: einen Teil des Bandkörpers gemäß Fig. 3 in zwei perspektivischen Ansichten.

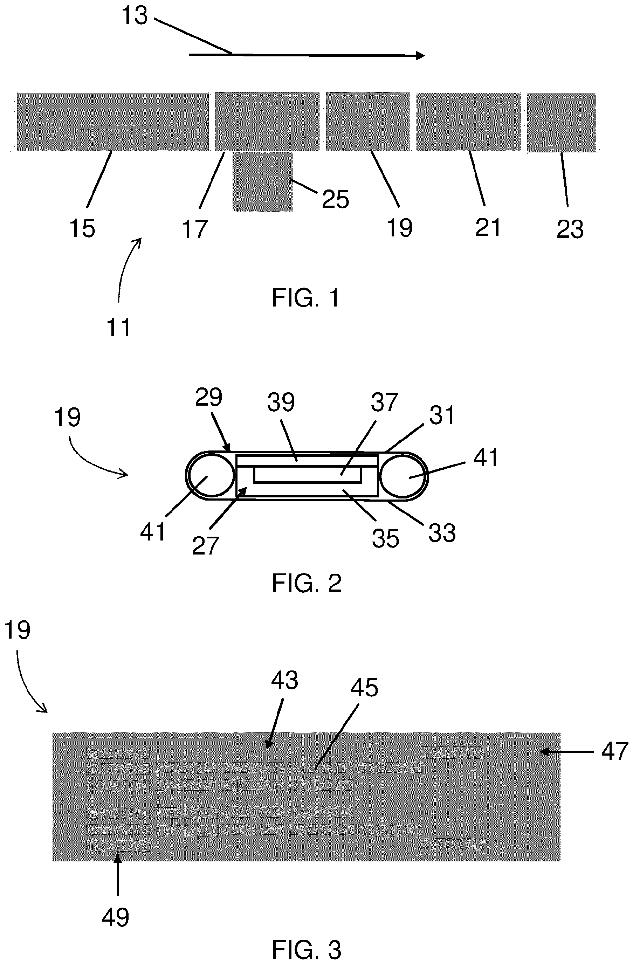

Fig. 1 zeigt eine Kontrollwaage 11, auf die nicht dargestellte Lebensmittelprodukte mit einer Verpackung aus einem magnetisierbaren Material, insbesondere Konservendosen, insbesondere aus Weißblech, aufgelegt und von einem ersten Förderband 15 einer ansonsten nicht weiter dargestellten Produktionsstation in einer Transportrichtung 13 über ein zweites bis viertes Förderband 17, 19, 21 zu einem Wägeband 23 transportiert werden. Die Konservendosen werden an dem Wägeband 23 gewogen. Fehlgewichtige Konservendosen, d.h. Konservendosen, die nicht innerhalb eines erwarteten Gewichtsbereichs liegen, werden anschließend aussortiert.

Bei dem zweiten Förderband 17 handelt es sich um Förderband, das mit einem Drucker 25 kombiniert ist, um die Konservendosen mit einem Etikett zu versehen. Das zweite Förderband 17 wird mit derselben Transportgeschwindigkeit von z.B. 40 m/min betrieben wie das erste Förderband 15. Bei dem dritten Förderband 19 handelt es sich um ein Förderband, das mit einer höheren Transportgeschwindigkeit von z.B. 160 m/min betrieben wird. Dies ist erforderlich, da die Konservendosen von der Produktionsstation eng aneinander liegend ausgegeben werden und für die Gewichtsbestimmung durch das Wägeband 23 vereinzelt werden müssen. Die Konservendosen werden beim Übergang von dem zweiten Förderband 17 auf das dritte Förderband 19 also beschleunigt, wodurch der Abstand der Konservendosen zueinander erhöht wird. Das dritte Förderband 19 wird auch als Vereinzelungsband bezeichnet. Das vierte Förderband 21 transportiert die vereinzelten Konservendosen dann zu dem Wägeband 23 und kann grundsätzlich auch weggelassen werden. Das vierte Förderband 21 und das Wägeband 23 besitzen dieselbe höhere Transportgeschwindigkeit wie das dritte Förderband 19. Der vorgenannte Betrieb wird durch eine nicht dargestellte Steuereinheit ermöglicht, die die Kontrollwaage in einem entsprechenden Betriebsmodus betreibt.

In Fig. 2 ist dargestellt, dass das dritte Förderband 19 einen Bandkörper 27, zwei Umlenkrollen 41, von denen eine angetrieben ist, und ein Einzeltransportband 29 aufweist, das im Betrieb des dritten Förderbands 19 um den Bandkörper 27 umläuft. Das Transportband 29 umfasst ein Obertrum 31, das auch als Lasttrum oder Zugtrum bezeichnet wird, und ein Untertrum 33, das auch als Leertrum bezeichnet wird. Auf dem Bandkörper 27 ist eine Deckplatte 39 vorgesehen, die auf ihrer Oberseite mit einem Teflonklebeband versehen ist, um die Reibung des Obertrums 31 an dem Bandkörper 27 zu verringern.

Der Bandkörper 27 ist mit einer Magnetanordnung 43 versehen, wie es in Fig. 3 dargestellt ist. Die Magnetanordnung 43 erzeugt ein in Richtung des Obertrums 31 des Transportbands 29 des dritten Förderbands 19 wirkendes Magnetfeld, durch das die Konservendosen angezogen und so trotz der ruckartigen Beschleunigung beim Übergang von dem zweiten Förderband 17 auf das dritte Förderband 19 stabil und sicher auf der Oberfläche des Obertrums 31 gehalten werden.

Die Magnetanordnung 43 umfasst eine Vielzahl von identischen, reinen Permanentmagneten 45, die über den Bandkörper 27 verteilt angeordnet sind und von denen der Übersichtlichkeit halber nur ein Permanentmagnet 45 mit einem Bezugszeichen versehen ist. Die Permanentmagnete 45 sind derart in sechs in Transportrichtung 13 orientierte Spalten 47 und sieben senkrecht zu den Spalten 47 orientierte Zeilen 49 angeordnet, dass sich das in Fig. 3 gezeigte Muster ergibt, das spiegelsymmetrisch zu einer sich in Transportrichtung 13 und senkrecht zum Obertrum 31 des Transportbands 29 des dritten Förderbands 19 erstreckenden Symmetrieebene ausgebildet ist. Wiederum der Übersichtlichkeit halber sind lediglich eine Spalte 47 und lediglich eine Zeile 49 mit einem Bezugszeichen versehen. In der ersten Zeile 49 sind alle Spalten 47 mit einem Permanentmagneten 45 besetzt, in der zweiten bis vierten Zeile 49 die inneren vier Spalten 47, in der fünften Zeile 49 nur noch die beiden äußeren der inneren vier Spalten 47, in der sechsten Zeile 49 nur noch die beiden äußeren Spalten 47, und in der siebten Zeile 49 sind keine Permanentmagneten 45 mehr vorgesehen.

Die Anzahl der Permanentmagnete 45 pro Zeile nimmt also in Transportrichtung 13, d.h. von bandeinlaufseitig nach bandauslaufseitig, stufenweise monoton ab. Das durch die Magnetanordnung 43 erzeugte Magnetfeld nimmt deshalb an dem bandeinlaufseitigen Ende des dritten Förderbands 19 seinen höchsten Wert an und fällt zum bandauslaufseitigen Ende hin stufenweise monoton, insbesondere auf den Wert Null, ab. Der Magnetfeldwert ist bandeinlaufseitig am höchsten, da dort die ruckartige Beschleunigung der Konservendosen beim Übergang von dem zweiten Förderband 17 auf das dritte Förderband 19 ausgeglichen werden muss, wohingegen bandauslaufseitig kein derartiges Magnetfeld mehr erforderlich ist.

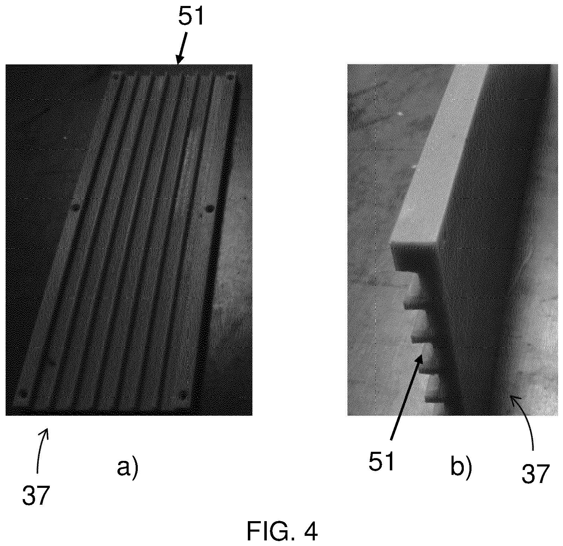

Der Bandkörper 27 ist mehrteilig ausgebildet und umfasst eine Rahmenkonstruktion 35 und einen mit der Rahmenkonstruktion 35 austauschbar verbindbaren Magnetträger 37 (vgl. Fig. 2), auf dem die Permanentmagnete 45 aufgebracht sind. Es können mehrere Magnetträger 37 vorgesehen sein, die sich in der Anzahl und/oder der Anordnung der Permanentmagnete 45 voneinander unterscheiden und alternativ zueinander in die Rahmenkonstruktion 35 einsetzbar sind. In dem Magnetträger 37 sind sich in Transportrichtung 13 erstreckende, parallel zueinander verlaufende Nuten 51 ausgebildet (vgl. Fig. 4), in die die Permanentmagnete 45 gemäß dem vorstehend erläuterten Muster lagefest auf gleicher Ebene eingesetzt, insbesondere lediglich eingelegt oder eingeklebt, sind. Wiederum der Übersichtlichkeit halber ist in den beiden Ansichten gemäß den Fig. 4 a) und b) jeweils lediglich eine Nut 51 mit einem Bezugszeichen versehen. Der Magnetträger 37 kann aus einem magnetisierbaren Vollmaterial, insbesondere aus ferritischen Stahl, bestehen, in das die Nuten 51 eingefräst sind.

Die Permanentmagnete 37 mit Abmessungen von beispielsweise 20 mm x 10 mm x 5 mm sind quaderförmig ausgebildet und mit ihrer größten Kantenlänge in Längsrichtung der Nuten 51 ausgerichtet. Mit ihrer kleinsten Kantenlänge erstrecken sich die Permanentmagnete 37 in Richtung des Obertrums 31 des Transportbands 29 des dritten Förderbands 19. Die Magnetisierungsrichtung der Permanentmagnete 37 zeigt jeweils in Richtung des Obertrums 31. Die Pole der Permanentmagnete 37 zeigen dabei wechselseitig mit ihren Süd- und Nordpolen nach oben.

### Bezugszeichenliste

- 11: Kontrollwaage
- 13: Transportrichtung
- 15: erstes Förderband
- 17: zweites Förderband
- 19: drittes Förderband
- 21: viertes Förderband
- 23: Wägeband
- 25: Drucker
- 27: Bandkörper
- 29: Transportband
- 31: Obertrum
- 33: Untertrum
- 35: Rahmenkonstruktion
- 37: Magnetträger
- 39: Deckplatte
- 41: Umlenkrolle
- 43: Magnetanordnung
- 45: Permanentmagnet
- 47: Spalte
- 49: Zeile
- 51: Nut

## Patentansprüche

1. Förderband zum Transport von Lebensmittelprodukten mit einer Verpackung aus einem magnetisierbaren Material, insbesondere Konservendosen, entlang einer Transportrichtung (13), wobei das Förderband (19) einen Bandkörper (27) und ein im Betrieb des Förderbands (19) um den Bandkörper (27) umlaufendes Transportband (29) mit einem Obertrum (31) und einem Untertrum (33) umfasst,
**dadurch gekennzeichnet,**
**dass** der Bandkörper (27) mit einer Magnetanordnung (43) versehen ist, die ein in Richtung des Obertrums (31) des Transportbands (29) wirkendes Magnetfeld erzeugt, das bandeinlaufseitig einen höheren Wert besitzt als bandauslaufseitig.

2. Förderband nach Anspruch 1,
**dadurch gekennzeichnet,**
**dass** das Magnetfeld an dem bandeinlaufseitigen Ende des Förderbands (19) seinen höchsten Wert annimmt und/oder der Wert des bandauslaufseitigen Magnetfelds höchstens 20%, insbesondere höchstens 10%, des Werts des bandeinlaufseitigen Magnetfelds beträgt, insbesondere gleich Null ist.

3. Förderband nach Anspruch 1 oder 2,
**dadurch gekennzeichnet,**
**dass** das Magnetfeld in Transportrichtung (13) von bandeinlaufseitig nach bandauslaufseitig monoton, insbesondere stufenweise monoton, abnimmt.

4. Förderband nach einem der vorstehenden Ansprüche,
**dadurch gekennzeichnet,**
**dass** die Magnetanordnung (43) eine Vielzahl von Permanentmagneten (45) umfasst, die über den Bandkörper (27) verteilt angeordnet sind, wobei bevorzugt die Permanentmagnete (45) gemäß einem Muster mit mehreren, insbesondere wenigstens drei, in Transportrichtung (13) verlaufenden Spalten (47) und mehreren, insbesondere wenigstens drei, hierzu quer, insbesondere senkrecht, verlaufenden Zeilen (49), angeordnet sind, wobei wenigstens drei Spalten (47) und wenigstens drei Zeilen (49) jeweils mit einem Permanentmagneten (45) besetzt sind.

5. Förderband nach Anspruch 4,
**dadurch gekennzeichnet,**
**dass** das Muster derart gewählt ist, dass die Anzahl der Permanentmagnete (45) pro Zeile in Transportrichtung (13) von bandeinlaufseitig nach bandauslaufseitig monoton, insbesondere stufenweise monoton, abnimmt, wobei bevorzugt in der in Transportrichtung (13) von bandeinlaufseitig nach bandauslaufseitig gesehen letzten Zeile keine Permanentmagnete (45) angeordnet sind.

6. Förderband nach Anspruch 4 oder 5,
**dadurch gekennzeichnet,**
**dass** die Permanentmagnete (45) spiegelsymmetrisch zu einer sich in Transportrichtung (13) und senkrecht zum Obertrum (31) des Transportbands (29) erstreckenden Symmetrieebene angeordnet sind.

7. Förderband nach einem der Ansprüche 4 bis 6,
**dadurch gekennzeichnet,**
**dass** der Bandkörper (27) mehrteilig mit einer Rahmenkonstruktion (35) und einem in die Rahmenkonstruktion (35) austauschbar integrierbaren, insbesondere magnetisierbaren, Magnetträger (37) ausgebildet ist, wobei der Magnetträger (37) mit der Magnetanordnung (43) versehen ist, wobei mehrere Magnetträger (37) vorgesehen sind, die sich in der Anzahl und/oder der Anordnung der Permanentmagnete (45) voneinander unterscheiden und alternativ zueinander in die Rahmenkonstruktion (35) integrierbar sind.

8. Förderband nach einem der Ansprüche 4 bis 7,
**dadurch gekennzeichnet,**
**dass** der Bandkörper (27), insbesondere ein Teil (37) hiervon, sich in Transportrichtung (13) erstreckende, insbesondere parallel zueinander verlaufende, Nuten (51) aufweist, in die die Permanentmagnete (45) eingesetzt sind,
wobei bevorzugt der Teil (37) des Bandkörpers (27) einstückig, insbesondere aus einem, insbesondere magnetisierbaren, Vollmaterial, insbesondere ferritischen Stahl, bestehend, ausgebildet ist und/oder die Permanentmagnete (45) in die Nuten (51) eingelegt oder eingeklebt sind.

9. Förderband nach einem der Ansprüche 4 bis 8,
**dadurch gekennzeichnet,**
**dass** es sich bei den Permanentmagneten (45) um nicht schaltbare, reine Permanentmagnete (45) handelt und/oder die Permanentmagnete (45) lagefest angeordnet sind, d.h. dass Position und Orientierung der Permanentmagnete (45) fest sind.

10. Förderband nach einem der Ansprüche 4 bis 9,
**dadurch gekennzeichnet,**
**dass** die Permanentmagnete (45) als Quadermagnete ausgebildet sind,
wobei bevorzugt die Permanentmagnete (45) mit ihrer größten Kantenlänge in Transportrichtung (13) und ihrer kleinsten Kantenlänge in Richtung des Obertrums (31) des Transportbands (29) ausgerichtet sind und/oder die Kantenlängen der Permanentmagnete (45) höchstens 40 mm, höchstens 20 mm und höchstens 10 mm betragen.

11. Förderband nach einem der Ansprüche 4 bis 10,
**dadurch gekennzeichnet,**
**dass** die Permanentmagnete (45) identisch sind und/oder in einer Ebene und/oder auf gleicher Höhe angeordnet sind.

12. Förderband nach einem der Ansprüche 4 bis 11,
**dadurch gekennzeichnet,**
**dass** die Magnetisierungsrichtung der Permanentmagnete (45) in Richtung des Obertrums (31) des Transportbands (29) zeigt,
wobei bevorzugt die Pole benachbarter Permanentmagnete (45) in Transportrichtung (13) und quer, insbesondere senkrecht, zur Transportrichtung (13) wechselseitig orientiert sind.

13. Förderband nach einem der vorstehenden Ansprüche,
**dadurch gekennzeichnet,**
**dass** der Bandkörper (27) an seiner dem Obertrum (31) des Transportbands (29) zugewandte Seite oder eine auf dem Bandkörper (27) befestigte Deckplatte (39) an ihrer dem Obertrum (31) des Transportbands (29) zugewandten Seite mit einer Teflonbeschichtung, insbesondere einem Teflonklebeband, versehen ist.

14. Förderband nach einem der vorstehenden Ansprüche,
**dadurch gekennzeichnet,**
**dass** das Förderband (19) als Auflegeförderband ausgebildet ist, bei dem die Lebensmittelprodukte auf das Obertrum (31) des Transportbands (29) aufgelegt werden, und/oder
**dass** das Förderband (19) als Gurtförderer ausgebildet ist, bei dem das Transportband (29) als ein einziger Fördergurt ausgebildet ist.

15. Kontrollwaage oder Preisauszeichner, mit einem Förderband (19) nach einem der vorstehenden Ansprüche, einem dem Förderband (19) vorgeschalteten Zuführband (17) und einem dem Förderband (19) nachgeschalteten Wägeband (23), wobei eine Steuereinheit vorgesehen ist, die einen Betriebsmodus aufweist, der die Bänder derart steuert, dass die Transportgeschwindigkeit des Förderbands (19), insbesondere um wenigstens einen Faktor 2, insbesondere um wenigstens einen Faktor 3, größer ist als die Transportgeschwindigkeit des Zuführbands (17) und dass die Transportgeschwindigkeit des Wägebands (23) der Transportgeschwindigkeit des Förderbands (19) entspricht.
